# FASCICULE DE BREVET EUROPEEN

(11) **EP 0 806 264 B1**
(45) Date de publication et mention de la délivrance du brevet: **22.05.2002**
(21) Numéro de dépôt: 96810298.8
(22) Date de dépôt: 10.05.1996
(51) Int. Cl.: B23Q 1/54, B23Q 1/62

(54) **Machine-outil à broche excentrable**
Werkzeugmaschine mit Exzenterspindel
Machine tool with eccentric spindle

(43) Date de publication de la demande: 12.11.1997
(73) Titulaire: Kummer Frères SA, Fabrique de machines, CH-2720 Tramelan (CH)
(72) Inventeur: Muster, Jacques, 2720 Tramelan (CH); Roquier, François, 2720 Tramelan (CH)
(74) Mandataire: WILLIAM BLANC & CIE

(56) Documents cités:
- EP-A- 0 486 992
- EP-A- 0 791 428
- DE-A- 19 511 420
- DE-C- 3 320 129
- GB-A- 1 244 703

## Description

La présente invention concerne une machine-outil, notamment un tour, possédant une broche munie d'un porte-pièce ou d'un porte-outil excentrable relativement à l'axe de rotation de la broche selon le préambule de la revendication 1.

Une machine-outil travaillant en rotation ne peut généralement usiner que des pièces ayant des portées cylindriques ou coniques concentriques et coaxiales, c'est-à-dire que les axes de rotation des diverses portées sont tous alignés sur un axe longitudinal principal. Lorsqu'on désire usiner une pièce munie d'une ou plusieurs portées excentrées entre elles, il est nécessaire d'arrêter la machine entre l'usinage des diverses portées, de décaler la broche porte-pièce ou la broche porte-outil d'une valeur déterminée et de reprendre l'usinage pour la portée excentrée suivante. Ceci nécessite de nombreuses manipulations, éventuellement un desserrage et un nouveau serrage de la pièce, opérations irréalisables généralement ou très difficiles à réaliser par des moyens automatiques. De telles manipulations influent négativement sur la précision d'usinage de même que sur la cadence de travail.

La demande EP-A-0.486.992 décrit un centre d'usinage sur lequel l'axe de rotation de la broche est excentrable par rapport au bâti de la machine. Cette machine ne pourrait pas facilement usiner des pièces comme décrites plus haut.

Le brevet GB-1.244.703 montre un dispositif dans lequel le déplacement du porte-outil relativement à l'axe de rotation de la broche se fait uniquement sur une courbe; on ne peut donc pas atteindre n'importe quel point du plan perpendiculaire à l'axe de rotation de la broche.

La demande DE-A-1.95.11.420 décrit un tour dont la broche est apte à être excentrée selon une valeur fixe par rapport à l'axe principal d'usinage. Une telle machine ne peut donc usiner qu'une pièce ayant une seule portée excentrée. D'autre part, l'excentrage est fixe et est donc ni réglable, ni programmable.

La machine-outil de EP 0 791 428 A1 possède une broche et un coulisseau apte à être déplacée selon un axe perpendiculaire à l'axe principal; par contre elle ne possède aucun moyen permettant de limiter la transmission des efforts dûs aux forces centrifuges sur l'arbre de la machine.

Le but de l'invention est donc de proposer une machine-outil exempte des inconvénients mentionnés des machines de l'art antérieur et possédant une broche munie d'un porte-outil ou d'un porte-pièce, apte à être excentré d'une valeur quelconque entre des limites données, selon un axe perpendiculaire à l'axe de rotation de la broche.

Un autre but de l'invention est de proposer une machine-outil possédant une broche munie de moyens de compensation du balourd créé par l'excentrage du porte-pièce ou du porte-outil.

Une telle machine-outil, répondant aux buts mentionnés ainsi qu'à d'autres buts encore et possédant encore d'autres avantages est conforme à la partie caractérisante de la revendication 1 ainsi qu'à celle des revendications dépendantes.

La description qui suit concerne particulièrement un tour monobroche à broche excentrable; l'homme du métier saura adapter le dispositif décrit à d'autres types de machines-outils. Cette description est à considérer en regard du dessin annexé comportant les figures où:
la figure 1 représente un exemple d'un type de pièce réalisable par le tour à serrage excentrable selon l'invention,
la figure 2 représente un schéma de principe du tour à serrage excentrable selon l'invention,
la figure 3 est une vue en coupe selon un plan perpendiculaire à l'axe d'excentrage de la broche d'un tour à serrage excentrable,
la figure 4 est une vue en coupe partielle montrant un détail d'exécution,
la figure 5 est une vue en coupe d'un dispositif de serrage de la pièce à usiner,

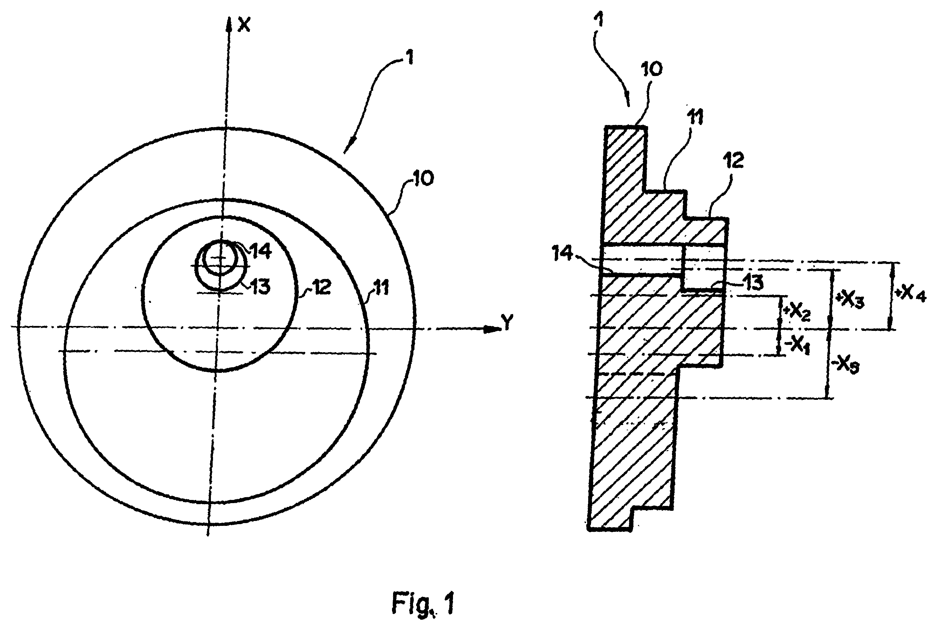

La pièce 1 de la figure 1 comprend une première portée cylindrique 10 ayant un certain diamètre; sur cette première portée 10, on a une deuxième portée cylindrique 11 dont le diamètre est inférieur à celui de la première portée et dont l'axe longitudinal est décalé d'une valeur - X₁ par rapport à l'axe longitudinal de la portée 10. Une troisième portée 12 est usinée sur la portée précédente, ayant elle aussi un diamètre inférieur et un décalage + X₂ par rapport à l'axe longitudinal de la première portée. La pièce 1 peut comporter en outre un alésage 13, dont l'axe longitudinal est aussi décalé d'une valeur + X₃ ainsi qu'un perçage traversant 14 dont l'axe longitudinal est décalé de + X₄. La pièce 1 représentée ici à titre d'exemple est réalisée uniquement à partir d'opérations de tournage, d'alésage et de perçage, mais il est bien entendu que toutes les autres opérations d'usinage réalisables sur tour peuvent être effectuées, par exemple usinage de cônes, de saignées, etc., ayant leur axe longitudinal décalé selon l'axe des X.

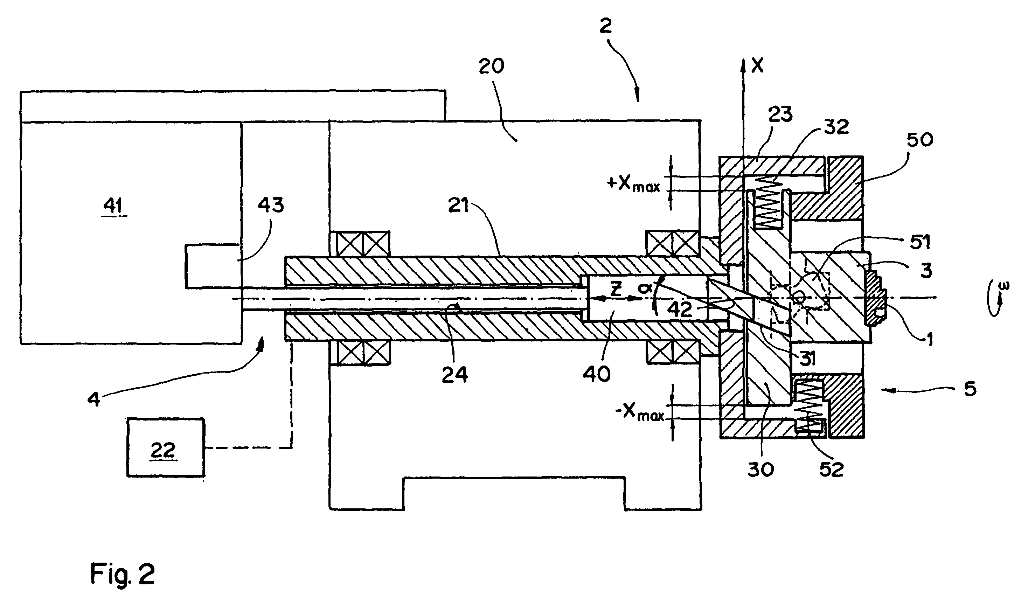

La figure 2 montre un schéma de principe d'une machine-outil 2, particulièrement d'un tour à serrage excentrable, des détails d'exécution étant représentés sur les figures suivantes. Le tour 2 dont seule une portion est représentée, comprend notamment une poupée 20 dans laquelle un arbre 21, entraîné par un moteur 22, met en rotation une broche porte-pièce 23. Dans le cas présent, la broche 23 présente une forme générale de cloche, ayant son ouverture vers la droite de la figure, respectivement vers la pièce à usiner 1. A l'intérieur de la broche 23, un coulisseau 3, supportant la pièce à usiner 1, est apte à se déplacer selon l'axe des X. Pour ceci, le coulisseau 3 comporte de préférence une portion de fond 30 percée d'un trou oblique 31. La commande de déplacement du coulisseau 3 est obtenue par des moyens de commande de déplacement 4. Ces moyens 4 peuvent consister en un tirant 40, apte à coulisser longitudinalement à l'intérieur d'un alésage 24 réalisé dans l'arbre 21, le déplacement du tirant 40 étant commandé par un moyen adéquat, de préférence un axe numérique 41 relié d'une part à la poupée 20 du tour et d'autre part à une extrémité du tirant 40. L'autre extrémité du tirant 40 comprend une portée oblique 42, faisant un angle α avec l'axe longitudinal du tour, ladite portée oblique 42 étant engagée et étant apte à coulisser dans le trou oblique 31. Ainsi, lorsque l'axe numérique 41 commande le déplacement du tirant selon l'une ou l'autre direction de l'axe Z, le coulissement de la portée oblique 42 dans le trou oblique 31 provoque un déplacement du coulisseau 3 selon l'axe X, respectivement un décentrage de la pièce à usiner 1 par rapport à l'axe longitudinal principal du tour. Pour un décentrage Xᵢ désiré, le déplacement du tirant 40 doit prendre une valeur Zᵢ = Xᵢ/tg α. Un capteur 43 permet de contrôler la valeur du déplacement Zᵢ en fonction du décentrement Xᵢ désiré. Un premier ressort 32, disposé entre la broche 23 et le coulisseau 3 permet de stabiliser la position de ce dernier. Le déplacement total possible du coulisseau 3 relativement à la broche 23 est donné par la différence entre le diamètre intérieur de la cloche de la broche 23 et le diamètre extérieur du coulisseau 3. Afin de pouvoir commander le déplacement du coulisseau 3 sur une distance maximum, le tirant doit donc être à même de se déplacer d'une distance équivalent à cette différence de diamètres divisée par tg α., la portion de fond 30 du coulisseau 3 devant être dimensionnée de telle manière que la portée oblique 42 reste constamment engagée dans le trou oblique 31.

Vu que le coulisseau 3 et la pièce à usiner 1 présentent une masse M, le décentrage d'une valeur Xᵢ de ces éléments provoque un balourd proportionnel à M * Xᵢ pouvant se reporter notamment sur l'arbre 21 et provoquer une usure prématurée des roulements qui le soutiennent. Afin de compenser ce balourd, on peut prévoir des moyens d'équilibrage 5, pouvant être composés d'une pièce massive, ici une couronne 50, présentant une certaine masse et apte à se déplacer aussi selon l'axe des X, mais selon une direction opposée au déplacement du coulisseau 3. Un jeu de leviers 51 permet ce déplacement relatif de la couronne 50 par rapport au coulisseau 3. De préférence, la masse de la couronne sera ajustée pour valoir la valeur M précédente, par exemple en ajoutant des vis dans des taraudages prévus à cet effet dans la couronne 50 et le jeu de leviers 51 sera déterminé pour provoquer un déplacement de la couronne 50 de même valeur mais de sens opposé à celui commandé au coulisseau 3. Il serait aussi possible de prévoir que la masse de la couronne 50 soit différente de la masse M du coulisseau 3 et de la pièce à usiner; dans ce cas, le déplacement commandé de la couronne sera calculé de manière à ce que le produit de la masse de la couronne 50 par son déplacement soit égal au produit de la masse M par le déplacement du coulisseau 3. Un deuxième ressort 52 stabilise la position de la couronne 50. Le décentrement du coulisseau 3 et de la couronne 50 provoque des forces centrifuges se reportant aussi sur l'arbre 21. Afin de limiter ces forces, les constantes des ressorts 32 et 52 sont choisies de manière à ce que pour un décentrement donné et une vitesse de rotation donnée de la broche 23, la force exercée par chaque ressort soit légèrement supérieure à la force centrifuge exercée par l'élément qu'il repousse. De cette manière, les forces exercées sur l'arbre 21 et le tirant 40 sont minimisées. Vu que le système de commande de déplacement du coulisseau 3 est en rotation avec la broche 23, il peut être avantageux de disposer la commande de déplacement du tirant 40, ici par exemple sous la forme d'un axe numérique 41, à l'autre extrémité de cette pièce afin d'assurer une transmission sûre du signal et de l'énergie nécessaire à cette commande de déplacement. Afin d'éviter des variations de longueur du tirant 40 en fonction de variations de température, créant des erreurs de décentrement, le tirant 40 est de préférence réalisé en un matériau à très faible coefficient de dilatation thermique, comme l'invar par exemple. Un tour à serrage excentrable comme décrit ci-dessus permet de réaliser des opérations de tournage à axes décentrés, les axes desdites opérations étant alignés sur l'axe X.

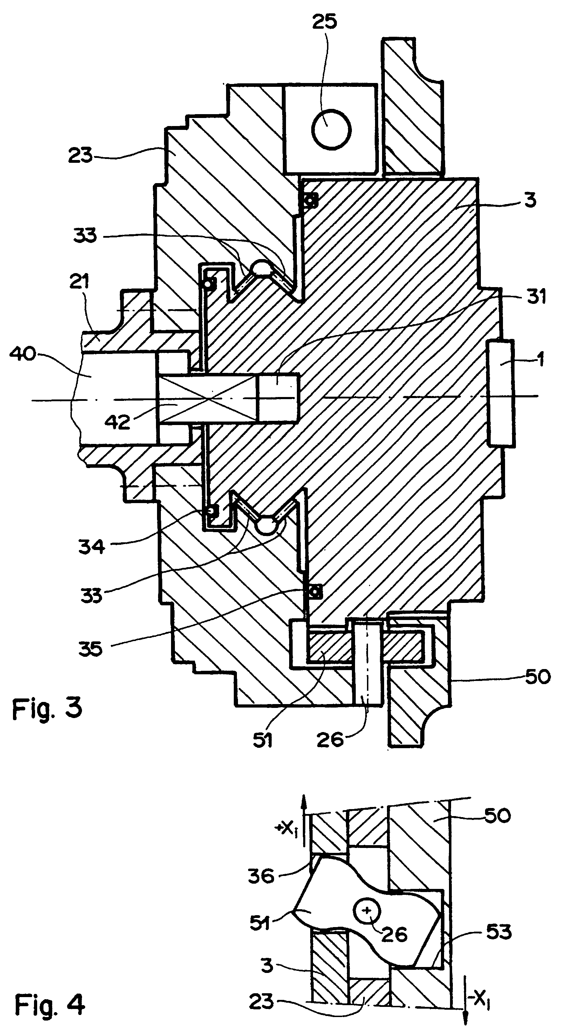

En se reportant à la figure 3, qui est une coupe selon un plan perpendiculaire à l'axe de décentrage X, on peut voir certains détails de la broche 23 et de l'articulation du coulisseau 3 et de la couronne 50. Les détails d'exécution ne sont pas tous représentés afin de ne pas surcharger la figure. L'arbre 21 entraîne en rotation la broche 23. Le tirant 40 est apte à se déplacer selon l'axe Z, comme indiqué précédemment la portée oblique 42 étant engagée dans le trou oblique 31 de la couronne 3. Deux paires de roulement à aiguilles linéaires 33 permettent le coulissement du coulisseau 3 relativement à la broche 23. On remarque aussi des joints 34, 35 rendant ce guidage étanche afin de le protéger des projections d'huile de coupe ainsi que des copeaux. Par ces roulements 33, on obtient donc un guidage parfait selon l'axe X du coulisseau 3 relativement à la broche 23. La couronne 50 peut glisser le long de deux tiges cylindriques 25 disposées sur les deux côtés de la broche 23. Une seule desdites tiges 25 est représentée sur la droite de la figure. On voit par contre sur la partie gauche de la figure le levier 51 apte à pivoter autour d'un axe 26 fixé à la broche 23. Un levier similaire se trouve aussi de l'autre côté de la broche 23. Le fonctionnement desdits leviers 51 est montré à la figure 4. On voit sur cette figure que le coulisseau 3 comporte une ouverture 36 en regard du levier 51, alors que la couronne 50 comporte une ouverture correspondante 53. Un déplacement d'une valeur Xᵢ, dans un sens ou dans l'autre, commandé au coulisseau 3 fait pivoter le levier 51 autour de son axe 26 et par conséquent entraîne la couronne 50 d'un déplacement correspondant en sens opposé. Sur la figure, le coulisseau 3 s'est déplacé selon la valeur maximum de son déplacement possible, ayant entraîné la couronne 50 aussi selon son déplacement maximum possible. Il serait aussi possible de prévoir que le rapport de transmission de déplacement ne soit pas 1 : 1 comme sur la figure, mais soit inversément proportionnel aux masses des éléments à déplacer. Comme indiqué précédemment, la couronne 50 glisse le long des tiges 25.

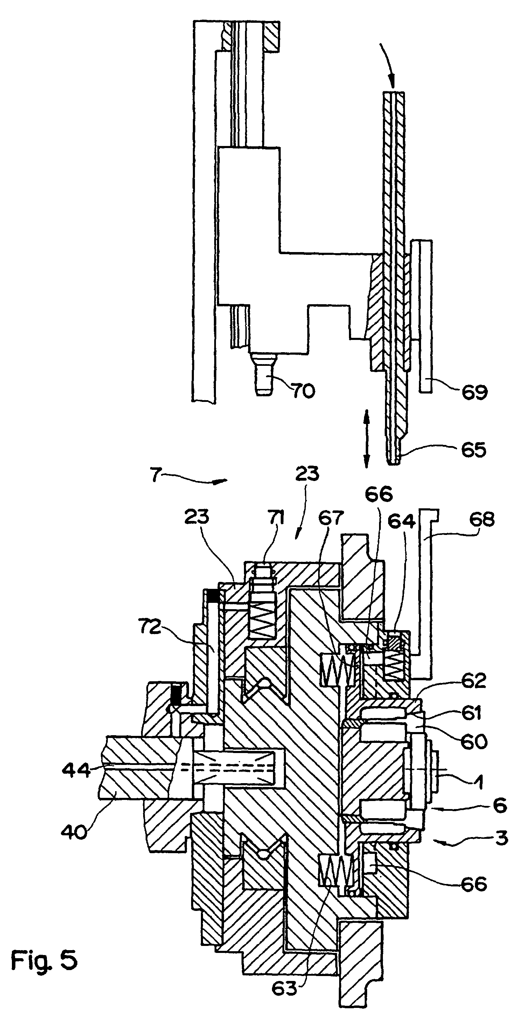

La figure 5 montre une vue en coupe d'une portion du coulisseau 3 montrant le dispositif de fixation 6 de la pièce à usiner 1. Celle-ci est serrée par une pince conventionnelle 60 faisant ressort, le fond de la pièce 1 étant appuyé sur une butée. Une portion de la surface extérieure de cette pince présente un cône 61. Une pièce de serrage 62, présentant une surface intérieure conique est déplaçable axialement et vient serrer ou desserrer la pince 60 selon sa position axiale. La pièce de serrage est maintenue vers la droite de la figure, selon la position qui serre la pince 60, au moyen d'une pluralité de ressorts 63 régulièrement disposés selon un cercle autour de l'axe longitudinal principal du tour. Pour desserrer la pince 60 afin d'installer ou de retirer une pièce à usiner 1, la broche, respectivement le coulisseau 3, est amené selon une position angulaire déterminée telle qu'un orifice d'admission d'air 64 est disposé en face d'une buse d'injection d'air comprimé 65 disposée sur une coulisse fixée d'une part à la poupée 20 et apte à permette un déplacement de la buse 65 en direction de l'orifice d'admission 64. L'orifice d'admission d'air 64 est en liaison avec une chambre d'air 66 disposée elle aussi selon un cercle autour de l'axe longitudinal principal du tour. Cette chambre d'air 66 est disposée d'un côté d'une paroi 67 faisant office de piston dont l'autre côté appuie sur les ressorts 63, ladite paroi faisant partie de la pièce de serrage 62. Lorsque la broche est arrêtée selon la position voulue, la buse 65 est abaissée et son extrémité est introduite dans l'orifice d'admission 64; de l'air comprimé est alors injecté qui se répand dans la chambre d'air 66 et repousse la paroi 67, respectivement la pièce de serrage 62 vers l'arrière, s'opposant à la force exercée par les ressorts 63, ce qui libère la pince 60 et la pièce à usiner 1. De préférence, l'orifice d'admission 64 est muni d'une valve à ressort, pouvant être actionnée par l'extrémité de la buse 65, ce qui empêche la pénétration de liquide d'usinage ou de copeaux dans le circuit d'air du dispositif de fixation 6. Un dispositif de contrôle du serrage ou desserrage de la pince 60 peut aussi être monté, par exemple à côté de la buse 65. Ce dispositif est constitué d'un cavalier 68, fixé à la pièce de serrage 62, et d'un détecteur 69, par exemple un détecteur inductif, approché du cavalier 68 lors de l'approche de la buse 65. En détectant la position avancée ou reculée du cavalier, respectivement de la pièce de serrage 62, et en transmettant cette information à une unité de commande (non représentée), le programme d'usinage est informé de l'état de serrage ou de desserrage de la pince 60. Un tel dispositif de fixation est particulièrement bien adapté au tour à serrage excentrable décrit précédemment, mais il peut aussi facilement être installé sur une machine-outil ou un tour conventionnel.

De préférence, le dispositif de lubrification 7 est constitué comme représenté sur la figure 5; il est constitué d'une buse 70, disposée sur le même support que la buse 65 ou un autre support et s'abaissant en même temps qu'elle. Un orifice d'admission de lubrifiant 71 est disposé sur la broche 23, en regard de la buse 70 et est relié par des canalisations 72 amenant le produit lubrifiant vers le tirant 40, d'où il est réparti vers les parties à lubrifier. Ainsi, la lubrification est complétée uniquement à l'arrêt de la machine lors d'un changement de pièce à usiner. De cette manière, une lubrification sûre est assurée au tirant 40 ainsi qu'à sa portion oblique 42, permettant que l'excentrage du coulisseau 3 soit commandé lorsque la broche 23 est en rotation. Comme on le voit sur cette même figure, une canalisation 44 traverse longitudinalement le tirant 40 ainsi que la portion oblique 42 afin d'amener un liquide de coupe, qui est chassé par des canalisations prévues à cet effet à travers le coulisseau 3, respectivement le dispositif de serrage 6 afin d'empêcher que des copeaux d'usinage ne pénètrent à l'intérieur du dispositif et bloquent les mouvements du coulisseau 3 et de la couronne 50.

L'homme du métier saura adapter la description qui précède à une autre machine-outil qu'un tour monobroche comme décrit. Les moyens décrits ci-dessus permettent donc de réaliser une machine-outil, notamment un tour dont la broche peut être excentrée de manière continue d'une valeur quelconque, la valeur de l'excentrage pouvant être commandée par des moyens de calcul numérique propres à la machine.

## Revendications

1. Machine-outil (2) comportant notamment une broche (23) en rotation autour d'un axe principal, ladite broche pouvant être une broche porte-pièce ou une broche porte-outil, ladite broche (23) comportant un coulisseau (3) portant la pièce à usiner (1) ou l'outil d'usinage, ledit coulisseau étant apte à être excentrée par rapport audit axe principal, l'excentrage pouvant être obtenu de manière continue et comprenant n'importe quelle coordonnée (Xᵢ) le long d'un axe perpendiculaire audit axe principal, ledit coulisseau étant apte à se déplacer le long dudit axe perpendiculaire audit axe principal, **caractérisée en ce qu'**un premier ressort (32) est disposé entre la broche (23) et le coulisseau (3), la constant dudit ressort étant choisie de manière à ce que sa force de pression soit toujours supérieure à la force centrifuge exercée par le coulisseau excentré.

2. Machine-outil, selon la revendication 1, **caractérisée en ce que** le coulisseau (3) est commandé en déplacement au moyen d'un tirant (40) disposé dans un logement longitudinal (24) de l'arbre d'entraînement (21) de la broche (23), ledit tirant comportant à son extrémité proche dudit coulisseau (3) une portée oblique (42) engagée dans et coopérant avec un trou oblique (31) aménagé dans une partie de fond (30) du coulisseau, un déplacement axial dudit tirant (40) entraînant un déplacement radial du coulisseau (3).

3. Machine-outil selon la revendication 2, **caractérisée en ce que** l'autre extrémité du tirant (40) est entraînée en déplacement axial au moyen d'un axe numérique (41), la valeur de déplacement du tirant étant contrôlée par un capteur (43).

4. Machine-outil selon l'une des revendications 2 ou 3, **caractérisée en ce que** le tirant (40) est constitué en un matériau à faible coefficient de dilatation thermique.

5. Machine-outil selon l'une des revendications précédentes, **caractérisée en ce que** l'excentrage du coulisseau (3), respectivement de la pièce à usiner (1), est commandé lorsque la broche (23) est en rotation.

6. Machine-outil selon l'une des revendications précédentes, **caractérisée en ce qu'**elle comporte en outre des moyens d'équilibrage (5) aptes à compenser le balourd créé par l'excentrage du coulisseau (3) et de la pièce à usiner (1).

7. Machine-outil selon la revendication 6, **caractérisée en ce que** les moyens d'équilibrage du balourd sont constitués d'une couronne (50) apte à se déplacer selon le même axe que le coulisseau (3) mais en sens opposé.

8. Machine-outil selon la revendication 7, **caractérisée en ce que** le déplacement de la couronne (50) est commandé par au moins un levier (51) pivotant autour d'un axe (26) fixé à la broche (23), une première extrémité dudit levier étant engagée dans une ouverture (36) aménagée dans le coulisseau (3) l'autre extrémité dudit levier étant engagée dans une autre ouverture (53) aménagée dans la couronne (50).

9. Machine-outil selon l'une des revendications 7 ou 8, **caractérisée en ce que** la masse de la couronne est ajustable de manière à égaliser la masse du coulisseau (3) ainsi que de la pièce à usiner (1), la valeur du déplacement dans un sens de la couronne (50) étant égale et opposée à la valeur de l'excentrage du coulisseau (3).

10. Machine-outil selon l'une des revendications 7 à 9, **caractérisée en ce qu'**un deuxième ressort (52) est disposé entre la broche (23) et la couronne (50), la constante dudit ressort étant choisie de manière à ce que sa force de pression soit toujours supérieure à la force centrifuge exercée par la couronne (50) excentrée.

11. Machine-outil selon l'une des revendications précédentes, **caractérisée en ce que** la pièce à usiner (1) est maintenue dans une pince circulaire à ressort (60) montée sur le coulisseau (3) et comportant une portion de surface extérieure conique (61), une pièce de serrage (62) déplaçable axialement entourant ladite pince (60) et comportant une surface conique coopérant avec la surface conique (61) de la pince (60) pour son serrage, le serrage de la pièce de serrage (62) contre la pince (60) étant obtenu au moyen d'une pluralité de ressorts (63), le desserrage étant obtenu au moyen d'air comprimé en provenance d'une buse d'injection (65), déplaçable radialement sur une poupée (20) de la machine-outil, ladite buse (65) étant engagée, lorsque la broche (23) n'est pas en rotation, dans un orifice d'admission d'air (64) disposé sur le coulisseau (3) afin d'injecter de l'air sous pression dans une chambre d'air (66) disposée dans une paroi (67) de ladite pièce de serrage (62), l'air sous pression s'opposant à la force exercée par les ressorts (63) afin de desserrer la pince (60) et de libérer la pièce à usiner (1).

12. Machine-outil selon la revendication 11, **caractérisée en ce qu'**elle comporte en outre des moyens permettant de contrôler l'état serré ou desserré de la pince de serrage (60), constitués d'un cavalier (68) fixé à ladite pince et d'un détecteur de position (69) dudit cavalier.

13. Machine-outil selon une des revendications 5-12 précédentes, **caractérisée en ce qu'**elle comporte en outre des moyens de lubrification (7) du tirant (40), constitués d'une buse d'injection de lubrifiant (70) déplaçable radialement sur la poupée (20) de la machine-outil, ladite buse (70) étant engagée, lorsque la broche (23) n'est pas en rotation, dans un orifice d'admission de lubrifiant (71) disposé sur la broche, afin d'injecter du lubrifiant dans une canalisation (72) reliée au logement (31,24) du tirant (40).

14. Machine-outil selon une des revendications 5-13 précédentes, **caractérisée en ce que** le tirant (40) ainsi que la portée oblique (42) comportent une canalisation (44) pour le passage d'un liquide d'usinage.

15. Machine-outil selon l'une des revendications précédentes, **caractérisée en ce qu'**elle constitue un tour.

## Claims

1. Machine tool (2) comprising notably a spindle (23) rotating about a main axis, said spindle including a workpiece holder or a tool holder, said spindle (23) comprising a slide (3) bearing the workpiece (1) to be machined or the machining tool, said slide being capable of being thrown off center in relation to said main axis, the off-centering being obtained continuously and comprising any desired coordinate (Xᵢ) along an axis perpendicular to said main axis, said slide being capable of moving along said axis perpendicular to said main axis, **characterised in that** a first spring (32) is disposed between the spindle (23) and the slide (3) the constant of said spring being so chosen that its force of pressure is always greater than the centrifugal force exerted by the off-center slide.

2. Machine tool according to claim 1, **characterised in that** the slide (3) is controlled in movement by means of a tie-rod (40) disposed in a longitudinal seating (24) of the driving shaft (21) of the spindle (23), said tie-rod comprising at the end thereof nearest said slide (3) an oblique projection (42) fitting in and cooperating with an oblique hole (31) contrived in a bottom part (30) of the slide, an axial movement of said tierod (40) bringing about a radial movement of the slide (3).

3. Machine tool according to claim 2, **characterised in that** the other end of the tie-rod (40) is driven with axial movement by means of a numerical control system (41), the amount of movement of the tie-rod being checked by a sensor (43).

4. Machine tool according to one of the claims 2 or 3, **characterised in that** the tie-rod (40) is made of a material having a low coefficient of heat expansion.

5. Machine tool according to one of the preceding claims, **characterised in that** the off-centering of the slide (3), hence the workpiece (1) to be machined, is controlled when the spindle (23) is rotating.

6. Machine tool according to one of the preceding claims, **characterised in that** it further comprises counterbalancing means (5) capable of compensating for the imbalance created by the off-centering of the slide (3) and the workpiece (1) to be machined.

7. Machine tool according to claim 6, **characterised in that** the means for counterbalancing the imbalance comprises a ring (50) capable of moving along the same axis as the slide (3) but in the opposite direction.

8. Machine tool according to claim 7, **characterised in that** the movement of the ring (50) is controlled by at least one lever (51) pivoting about a pin (26) fixed to the spindle (23), a first end of said lever fitting into an opening (36) contrived in the slide (3) the other end of said lever fitting in another opening (53) contrived in the ring (50).

9. Machine tool according to one of the claims 7 to 8, **characterised in that** the mass of the ring is adjustable so as to equal the mass of the slide (3) as well as of the workpiece (1) to be machined, the amount of the movement in one direction of the ring (50) being equal and opposite to the amount of the off-centering of the slide (3).

10. Machine tool according to one of the claims 7 to 9, **characterised in that** a second spring (52) is disposed between the spindle (23) and the ring (50), the constant of said spring being so chosen that its force of pressure is always greater than the centrifugal force exerted by the off-centering ring (50).

11. Machine tool according to one of the preceding claims, **characterised in that** the workpiece to be machined (1) is held in a circular spring clamp (60) mounted on the slide (3) and comprising a conical outside surface portion (61), a gripping part (62) movable axially surrounding said clamp (60) and comprising a conical surface cooperating with the conical surface (61) of the clamp (60) for its gripping, the gripping of the gripping part (62) against the clamp (60) being obtained by means of a plurality of springs (63), the release being obtained by means of compressed air coming from an injection nozzle (65) radially displaceable on one headstock (20) of the machine tool, said nozzle (65) fitting when the spindle (23) is not rotating, into an air inlet (64) disposed on the slide (3) in order to inject pressurised air into an air chamber (66) disposed on a wall (67) of said gripping part (62), the pressurised air opposing the force exerted by the springs (63) in order to release the clamp (60) and free the workpiece (1).

12. Machine tool according to claim 11, **characterized in that** it further comprises means for checking the gripped or released condition of the chucking clamp (60), made up of a radial arm (68) fixed to said clamp and a sensor (69) for detecting the position of said radial arm.

13. Machine tool according to one of the claims 5 to 12, **characterised in that** it further comprises means (7) for lubricating the tie-rod (40), made up of a lubricant injection nozzle (70) radially displaceable on the headstock (20) of the machine tool, said nozzle (70) fitting when the spindle (23) is not rotating, into a lubricant inlet (71) disposed on the spindle, in order to inject lubricant into a duct (72) connecting to the seating (31,24) of the tie-rod (40).

14. Machine tool according to one of the claims 5 to 13, **characterised in that** the tie-rod (40) and the oblique projection (42) comprise a duct (44) for the passage of a machining liquid.

15. Machine tool according to one of the preceding claims, **characterised in that** it constitutes a machining lathe (2).

## Patentansprüche

1. Werkzeugmaschine (2), insbesondere eine sich um eine Hauptachse drehende Spindel (23) umfassend, die eine ein Werkstück oder ein Werkzeug tragende Spindel sein kann, wobei die benannte Spindel (23) einen Schlitten (3) umfasst, der das zu bearbeitende Werkstück (1) oder das Bearbeitungswerkzeug trägt, und der benannte Schlitten in der Lage ist, bezüglich der benannten Hauptachse seitlich versetzt zu werden, wobei die Exzentrizität in kontinuierlicher Weise erhalten werden und jede beliebige Koordinate (Xᵢ) entlang einer zu der benannten Hauptachse senkrechten Achse umfassen kann und der benannte Schlitten in der Lage ist, sich entlang der benannten, zu der benannten Hauptachse senkrechten Achse zu verschieben, **dadurch gekennzeichnet, dass** eine erste Feder (32) zwischen der Spindel (23) und dem Schlitten (3) angeordnet ist, wobei die Konstante der benannten Feder so gewählt ist, dass ihre Andruckkraft immer grösser als die durch den seitlich verschobenen Schlitten ausgeübte Fliehkraft ist.

2. Werkzeugmaschine nach Anspruch 1, **dadurch gekennzeichnet, dass** der Schlitten (3) in seiner Verschiebung durch einen Zugstab (40) gesteuert wird, der in einem Längslager (24) der Antriebswelle (21) der Spindel (23) angeordnet ist, wobei der benannte Zugstab an seinem nahe dem benannten Schlitten (3) gelegenen Ende eine schräge Partie (42) umfasst, die in ein schräges Loch (31) eingreift und mit diesem Loch zusammenwirkt, das in einem Bodenabschnitt (30) des Schlittens angebracht ist, wobei eine Axialverschiebung des benannten Zugstabs (40) eine radiale Verschiebung des Schlittens (3) mit sich bringt.

3. Werkzeugmaschine nach Anspruch 2, **dadurch gekennzeichnet, dass** das andere Ende des Zugstabes (40) vermittels einer numerischen Achse (41) in Axialverschiebung gebracht wird, wobei der Betrag der Verschiebung des Zugstabes durch einen Fühler (43) überwacht wird.

4. Werkzeugmaschine nach einem der Ansprüche 2 oder 3, **dadurch gekennzeichnet, dass** der Zugstab (40) aus einem Werkstoff mit einem geringen thermischen Ausdehnungskoeffizienten besteht.

5. Werkzeugmaschine nach einem der vorangehenden Ansprüche, **dadurch gekennzeichnet, dass** die Exzentrizität des Schlittens (3) bzw. des zu bearbeitenden Werkstückes (1) gesteuert wird, während sich die Spindel (23) dreht.

6. Werkzeugmaschine nach einem der vorangehenden Ansprüche, **dadurch gekennzeichnet, dass** sie ausserdem Ausgleichsmittel (5) umfasst, die in der Lage sind, die durch die Exzentrizität des Schlittens (3) und des zu bearbeitenden Werkstücks (1) erzeugte Unwucht auszugleichen.

7. Werkzeugmaschine nach Anspruch 6, **dadurch gekennzeichnet, dass** die Ausgleichsmittel für die Unwucht aus einem Ring (50) bestehen, der in der Lage ist, sich entlang der gleichen Achse wie der Schlitten (3) zu verschieben, jedoch in der entgegengesetzten Richtung.

8. Werkzeugmaschine nach Anspruch 7, **dadurch gekennzeichnet, dass** die Verschiebung des Rings (50) durch zumindest einen Hebel (51) gesteuert wird, der sich um eine auf der Spindel (23) befestigte Achse (26) dreht, wobei ein erstes Ende des benannten Hebels in eine im Schlitten (3) angebrachte Öffnung (36) eingreift, während das andere Ende des benannten Hebels in eine andere, im Ring (50) angebrachte Öffnung (53) eingreift.

9. Werkzeugmaschine nach einem der Ansprüche 7 oder 8, **dadurch gekennzeichnet, dass** die Masse des Rings so eingestellt werden kann, dass sie der Masse des Schlittens (3) sowie des zu bearbeitenden Werkstücks (1) gleicht, wobei der Betrag der Verschiebung des Rings (50) in einer Richtung dem Betrag der Exzentrizität des Schlittens (3) mit umgekehrtem Vorzeichen gleicht.

10. Werkzeugmaschine nach einem der Ansprüche 7 bis 9, **dadurch gekennzeichnet, dass** eine zweite Feder (52) zwischen der Spindel (23) und dem Ring (50) angeordnet ist, wobei die Konstante der benannten Feder so gewählt ist, dass ihre Andruckkraft immer grösser als die durch den seitlich versetzten Ring (50) ausgeübte Fliehkraft ist.

11. Werkzeugmaschine nach einem der vorangehenden Ansprüche, **dadurch gekennzeichnet, dass** das zu bearbeitende Werkstück (1) in einer kreisrunden Federklemme (60) gehalten wird, die auf den Schlitten (3) montiert ist und einen Abschnitt (61) mit kegelförmiger Aussenfläche hat, wobei ein Einspannteil (62), das sich axial verschieben kann, die benannte Klemme (60) umgibt und eine konische Oberfläche hat, die mit der konischen Oberfläche (61) der Klemme (60) zusammenwirkt, damit diese schliesst, und wobei das Andrücken des Einspannteils (62) gegen die Klemme (60) durch eine Mehrzahl von Federn (63) erreicht wird, während das Lösen durch Druckluft erhalten wird, die aus einer Einspritzdüse (65) stammt, die sich radial auf einem Spindelstock (20) der Werkzeugmaschine verschieben kann, wobei die benannte Düse (65), während die Spindel (23) sich nicht dreht, in eine Lufteintrittsöffnung (64) eingreift, die auf dem Schlitten (3) angeordnet ist, um Druckluft in eine Luftkammer (66) einzuspritzen, die in einer Wand (67) des benannten Einspannteils (62) angeordnet ist, wobei die Druckluft der durch die Federn (63) ausgeübten Kraft entgegenwirkt, um die Klemme (60) zu öffnen und das zu bearbeitende Werkstück (1) freizugeben.

12. Werkzeugmaschine nach Anspruch 11, **dadurch gekennzeichnet, dass** sie ausserdem Mittel umfasst, die es gestatten, den gespannten oder entspannten Zustand der Einspannklemme (60) zu überwachen, und aus einem auf der benannten Klemme befestigten Reiter (68) sowie einem Positionsfühler (69) für den benannten Reiter bestehen.

13. Werkzeugmaschine nach einem der vorangehenden Ansprüche 5 bis 12, **dadurch gekennzeichnet, dass** sie ausserdem Schmierorgane (7) für den Zugstab (40) umfasst, die aus einer Schmiermittel-Einspritzdüse (70) bestehen, die sich radial auf dem Spindelstock (20) der Werkzeugmaschine verschieben kann, wobei die benannte Düse (70), wenn die Spindel (23) sich nicht dreht, in eine Schmiermittel-Eintrittsöffnung (71) eingreift, die auf der Spindel angeordnet ist, um Schmiermittel in eine Leitung (72) einzuspritzen, die mit dem Lager (31, 24) des Zugstabes (40) verbunden ist.

14. Werkzeugmaschine nach einem der vorangehenden Ansprüche 5 bis 13, **dadurch gekennzeichnet, dass** der Zugstab (40) wie auch die schräge Partie (42) Leitungen (44) für den Durchgang einer Bearbeitungsflüssigkeit umfassen.

15. Werkzeugmaschine nach einem der vorangehenden Ansprüche, **dadurch gekennzeichnet, dass** sie eine Drehbank darstellt.
